# EUROPEAN PATENT APPLICATION

(11) **EP 3 296 936 A1**
(43) Date of publication of application: **21.03.2018**
(21) Application number: 17162206.1
(22) Date of filing: 22.03.2017
(51) Int. Cl.: G06Q 10/06

(54) **METHOD AND SYSTEM FOR PROVIDING CONSULTATIVE ANALYTICS IN A MULTI-TENANT SOFTWARE ENVIRONMENT**

(30) Priority: 20.09.2016 IN 201621032117
(71) Applicant: Tata Consultancy Services Limited, Maharashtra (IN)
(72) Inventor: SHAH, VIRAL PRAKASH, 400 083 Mumbai, Maharashtra (IN); SINGH, GAURAV, 400 083 Mumbai, Maharashtra (IN); DESHMUKH, CHAITALI AVINASH, 480 007 Mumbai, Maharashtra (IN); RAKESH, BODDU, 400 083 Mumbai, Maharashtra (IN)
(74) Representative: Goddar, Heinz J.

(57) **Abstract**

A method and system is provided for providing consultative analytics in a multi-tenant software environment. The method is performed by registering a domain, wherein the domain represents the group of business entities in a process, creating a cube by defining dimensions belonging to the registered domain and defining relationships between the defined dimensions, wherein said cube is a dimension to dimension relationship, configuring report for said defined dimensions to fetch the data required for report generation and generating reports based on configured dimensions.

## Description

### PRIORITY

The present invention claims priority to India Application (Title: Method and system for providing consultative analytics in a multi-tenant software environment) No. 201621032117, filed in India on September 20, 2016.

### FIELD OF THE INVENTION

The present application generally relates to a reporting solution having capability of generating any type of visual report. More particularly, the invention provides a method and system for providing consultative analytics in a multi-tenant software environment.

### BACKGROUND

Currently, there is no single solution which can generate comparative analysis in different domains across different organizations. Generally, all the analytics solutions cater to domain specific requirements and there is no single software which can be utilized for any domain. Also, there is no solution where user can design a single generic report format which can be utilized to generate reports analytics for any other user of same domain having similar requirement.

Thereby, providing consultative analytics in a multi-tenant software environment to provide for comparative analysis in different domains across different organizations where one organization can compare data with its own data or with the data of other organizations is still considered to be one of the biggest challenges of the technical domain.

### SUMMARY OF THE INVENTION

Before the present methods, systems, and hardware enablement are described, it is to be understood that this invention is not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention which will be limited only by the appended claims.

The present disclosure envisages a method and system which can provide consultative analytics in a multi-tenant software environment.

In an embodiment of the invention, a method for providing consultative analytics in a multi-tenant software environment is provided. The method comprises processor implemented steps of registering a domain, wherein the domain represents the group of business entities in a process using a domain registration module (202), creating a cube by defining dimensions belonging to the registered domain and defining relationships between the defined dimensions, wherein said cube is a dimension to dimension relationship using a cube creation module (204), configuring report for said defined dimensions to fetch the data required for report generation using a report configuration module (206) and generating reports based on configured dimensions using a report generation module (208).

In another embodiment of the invention, a system for providing consultative analytics in a multi-tenant software environment is provided. The system comprises of a processor, a data bus coupled to the processor and a computer-usable medium embodying computer code, wherein the computer-usable medium is coupled to the data bus and the computer program code comprising instructions executable by said processor and configured for operating a domain registration module (202) adapted for registration of domain, wherein domain represents the group of business entities in a process, a cube creation module (204) adapted for creation of a cube by defining dimensions belonging to the registered domain and defining relationships between the defined dimensions, wherein said cube is a dimension to dimension relationship, a report configuration module (206) adapted for configuration of report for said defined dimensions to fetch the data required for report generation and a report generation module (208) adapted for generation of reports based on configured dimensions.

In another embodiment, a non-transitory computer readable medium embodying a program executable in a computing device for providing consultative analytics in a multi-tenant software environment is disclosed. The one or more instructions which when executed by one or more hardware processors causes registering a domain, wherein the domain represents the group of business entities in a process using a domain registration module (202), creating a cube by defining dimensions belonging to the registered domain and defining relationships between the defined dimensions, wherein said cube is a dimension to dimension relationship using a cube creation module (204), configuring report for said defined dimensions to fetch the data required for report generation using a report configuration module (206) and generating reports based on configured dimensions using a report generation module (208).

### BRIEF DESCRIPTION OF THE DRAWINGS

The foregoing summary, as well as the following detailed description of preferred embodiments, are better understood when read in conjunction with the appended drawings. For the purpose of illustrating the invention, there is shown in the drawings exemplary constructions of the invention; however, the invention is not limited to the specific methods and system disclosed. In the drawings:
Figure 1 shows a flow chart illustrating method for providing consultative analytics in a multi-tenant software environment, according to an embodiment of the present subject matter ;
Fig. 2 shows a block diagram of a system for providing consultative analytics in a multi-tenant software environment, according to an embodiment of the present subject matter.

### DETAILED DESCRIPTION OF THE INVENTION

Some embodiments of this invention, illustrating all its features, will now be discussed in detail.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred, systems and methods are now described. In the following description for the purpose of explanation and understanding reference has been made to numerous embodiments for which the intent is not to limit the scope of the invention.

One or more components of the invention are described as module for the understanding of the specification. For example, a module may include self-contained component in a hardware circuit comprising of logical gate, semiconductor device, integrated circuits or any other discrete component. The module may also be a part of any software programme executed by any hardware entity for example processor. The implementation of module as a software programme may include a set of logical instructions to be executed by a processor or any other hardware entity.

The disclosed embodiments are merely exemplary of the invention, which may be embodied in various forms.

The elements illustrated in the Figures interoperate as explained in more detail below. Before setting forth the detailed explanation, however, it is noted that all of the discussion below, regardless of the particular implementation being described, is exemplary in nature, rather than limiting.

Method steps of the invention may be performed by one or more computer processors executing a program tangibly embodied on a computer-readable medium to perform functions of the invention by operating on input and generating output. Suitable processors include, by way of example, both general and special purpose microprocessors. Generally, the processor receives (reads) instructions and data from a memory (such as a read-only memory and/or a random access memory) and writes (stores) instructions and data to the memory. Storage devices suitable for tangibly embodying computer program instructions and data include, for example, all forms of non-volatile memory, such as semiconductor memory devices, including EPROM, EEPROM, and flash memory devices; magnetic disks such as internal hard disks and removable disks; magneto-optical disks; and CD-ROMs. Any of the foregoing may be supplemented by, or incorporated in, specially-designed ASICs (application-specific integrated circuits) or FPGAs (Field-Programmable Gate Arrays). A computer can generally also receive (read) programs and data from, and write (store) programs and data to, a non-transitory computer-readable storage medium such as an internal disk (not shown) or a removable disk.

The present disclosure provides a method and system for providing consultative analytics in a multi-tenant software environment. The solution described in the invention provides comparative analysis in different domains across different organizations, where one organization can compare data with its own data or with the data of other organizations.

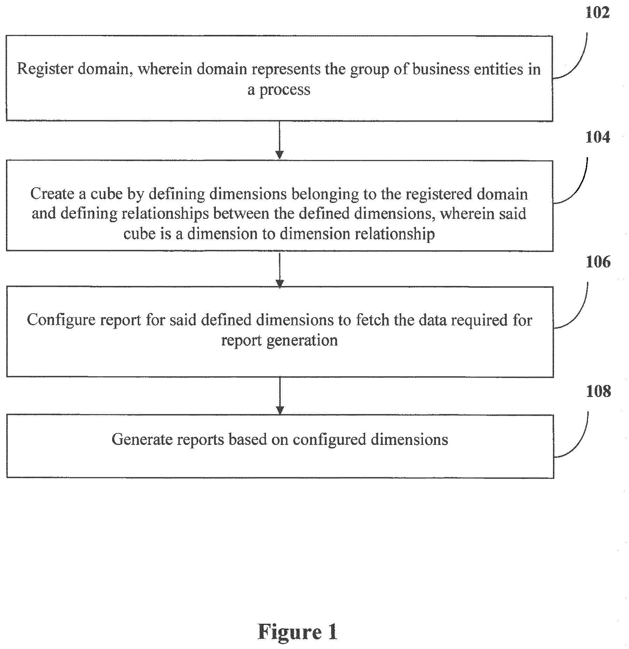

Referring to Figure 1, it is a flow chart illustrating method for providing consultative analytics in a multi-tenant software environment.

The process starts at step 102, a domain is registered, wherein domain represents the group of business entities in a process. At step 104, a cube is created by defining dimensions belonging to the registered domain and defining relationships between the defined dimensions, wherein said cube is a dimension to dimension relationship. At step 106, report is configured for said defined dimensions to fetch the data required for report generation. Finally, at step 108, reports are generated based on configured dimensions.

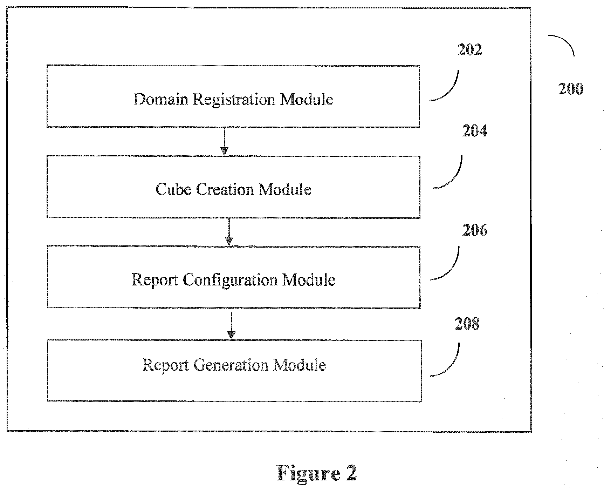

Referring to Figure 2, it is a block diagram of a system for providing consultative analytics in a multi-tenant software environment. The system (200) comprises of a domain registration module (202), a cube creation module (204), a report configuration module (206) and a report generation module (208).

According to an embodiment of the invention, the method for providing consultative analytics in a multi-tenant software environment comprises of registering a domain, wherein the domain represents the group of business entities in a process using a domain registration module (202), creating a cube by defining dimensions belonging to the registered domain and defining relationships between the defined dimensions, wherein said cube is a dimension to dimension relationship using a cube creation module (204), configuring report for said defined dimensions to fetch the data required for report generation using a report configuration module (206) and generating reports based on configured dimensions using a report generation module (208).

According to another embodiment of the invention, in the domain registration module (202), user can register a domain with system. The domain should be mapped with a particular application, wherein the application is an existing solution using which a user conducts daily transactions and the solution stores all the transactions data of the domain. The domain can be created for all organizations using the selected application or it can be created for a specific organization using that application.

According to another embodiment of the invention, in the cube creation module (204), a cube is created by defining dimensions belonging to the registered domain and defining relationships between the defined dimensions, wherein said cube is a dimension to dimension relationship. The dimensions are business entities of an organization and said dimensions may each have one to many relations. Dimensions are classified into two types- Level 0 dimensions are called as base dimensions (Independent Dimensions) and Level 1 dimensions are called as baseless dimensions. (Dependent Dimensions). For every dimension, user should provide an SQL query using to fetch data for the dimension. Once the domain and the dimensions are created, a user can create a relationship between one dimensions to other dimensions. The user can also modify the dimensions and its relationships.

According to another embodiment of the invention, in the report configuration module (206), report is configured for said defined dimensions to fetch the data required for report generation, wherein the report configuration module (206) further consists of creation of report, designing of report and uploading of template. First, a user selects the domain and enters report details and selects the base dimension for which report is to be generated. The user can also use pre-configured templates and then user can modify the pre-configured templates as per the requirement. Next, for designing of the report, the user adds dimensions as per the created cube, uses the appropriate query for said dimension, adds global and local variable to the query, wherein local variable fetches its value from parent query result set and global variable value is provided by user before generating report and validates the query for errors. User can add one or more dependent dimensions to the existing dimensions. Finally, for uploading the template, the user selects the domain name and report name and also provides for a description for the template.

According to another embodiment of the invention, in the report generation module (208), reports are generated based on configured dimensions, wherein the report generation module (208) further consists of defining value to global variable, defining report structure and generating final report. The generated report can contain any static or dynamic content or any graphical representation of data. In this module, user can generate reports using pre-defined report configurations. To generate a report, a user first selects domain and pre-configured report name using which report is to be generated. After selecting the domain and its report name, user selects the sample template and the excel sheet parameters, enter the details in the mandatory fields and generates the report.

## Claims

1. A method for providing consultative analytics in a multi-tenant software environment, said method comprising processor implemented steps of:
registration of domain, wherein domain represents the group of business entities in a process using a domain registration module (202);
creation of a cube by defining dimensions belonging to the registered domain and defining relationships between the defined dimensions, wherein said cube is a dimension to dimension relationship using a cube creation module (204);
configuration of report for said defined dimensions to fetch the data required for report generation using a report configuration module (206); and
generation of reports based on configured dimensions using a report generation module (208).

2. A method according to Claim 1, wherein said domain should be mapped with a particular application.

3. A method according to Claim 2, wherein the application is an existing solution using which a user conducts daily transactions and the solution stores all the transactions data of the domain.

4. A method according to Claim 1, wherein said dimensions are business entities of an organization.

5. A method according to Claim 1, wherein said dimensions may each have one to many relations.

6. A method according to Claim 1, wherein for every said dimension, a user should provide SQL query using to fetch data for the dimension.

7. A method according to Claim 1, wherein configuration of report for said defined dimensions to fetch the data required for report generation consists of creation of report, designing of report and uploading of template.

8. A method according to Claim 1, wherein generation of reports based on the configured dimensions consists of defining value to global variable, defining report structure and generating final report.

9. A method according Claim 1, wherein said generated report can contain any static or dynamic content or any graphical representation of data.

10. A system (200) for providing consultative analytics in a multi-tenant software environment, said system comprising:
a processor;
a data bus coupled to said processor; and
a computer-usable medium embodying computer code, said computer-usable medium being coupled to said data bus, said computer program code comprising instructions executable by said processor and configured for operating:
a domain registration module (202) adapted for registration of domain, wherein domain represents the group of business entities in a process;
a cube creation module (204) adapted for creation of a cube by defining dimensions belonging to the registered domain and defining relationships between the defined dimensions, wherein said cube is a dimension to dimension relationship;
a report configuration module (206) adapted for configuration of report for said defined dimensions to fetch the data required for report generation; and
a report generation module (208) adapted for generation of reports based on configured dimensions.

11. A non-transitory computer readable medium embodying a program executable in a computing device for providing consultative analytics in a multi-tenant software environment, the program comprising:
a program code for registration of domain, wherein domain represents the group of business entities in a process using a domain registration module (202);
creation of a cube by defining dimensions belonging to the registered domain and defining relationships between the defined dimensions, wherein said cube is a dimension to dimension relationship using a cube creation module (204);
configuration of report for said defined dimensions to fetch the data required for report generation using a report configuration module (206); and
generation of reports based on configured dimensions using a report generation module (208).
